# EUROPEAN PATENT SPECIFICATION

(11) **EP 3 875 321 B1**
(45) Date of publication and mention of the grant of the patent: **11.10.2023**
(21) Application number: 20305219.6
(22) Date of filing: 02.03.2020
(51) Int. Cl.: B60S 1/56, G01S 17/931, G02B 27/00

(54) **CLEANING DEVICE FOR A DETECTION SYSTEM**
REINIGUNGSVORRICHTUNG FÜR EIN DETEKTIONSSYSTEM
DISPOSITIF DE NETTOYAGE POUR SYSTÈME DE DÉTECTION

(43) Date of publication of application: 08.09.2021
(73) Proprietor: Valeo Systèmes d'Essuyage, 78322 Le Mesnil Saint Denis (FR)
(72) Inventor: BUTE, Radu-George, 74321 Bietigheim-Bissingen (DE); BEUCHLE, Ralf, 74321 Bietigheim-Bissingen (DE)
(74) Representative: Valeo Visibility

(56) References cited:
- EP-A1- 2 955 069
- US-A1- 2015 343 999

## Description

The present invention concerns the domain of detection system of a vehicle. More particularly, the invention relates to a cleaning device for a detection system of a vehicle.

More and more vehicles are nowadays implemented with detection systems, for example a parking aid or a LIDAR system, which are present in many recent vehicles. That's why the question about how to clean these detection systems has been quickly asked.

It is known to use cleaning devices which are able to spray a liquid, for example some water or a cleaning liquid, on a detection area of a detection system in case of fouling of the detection area which could lead to an obstruction of a field of view of the detection system. It is also known to use cleaning devices which are able to spray some compressed air of the detection area in order to evacuate any drops of liquid which could fall on the detection area, for example in case of raining weather. Ideally, the cleaning device should be able to spray both liquid and compressed air to deal against any situations that could affect the operation of the detection system.

To assure these functions, the cleaning device has to be equipped with a liquid circuit and an air circuit. The liquid can circulate through the liquid circuit thanks to a liquid tank and a pump which initiate a movement of such liquid. The compressed air can be generated by a compressor which sends the compressed air through the air circuit. Such embodiment may be a problem if the detection system is arranged in a small part of the vehicle, for example a side mirror. It could be difficult to arrange all parts of such cleaning device because of a lack of place around the detection system. It's possible to extend both circuits, for example with a plurality of hoses, in order to arrange some elements of the cleaning device remotely from the detection system. Such solution is unsatisfactory because both spraying become less effective due to the distance, especially for the compressed air whose the pressure quickly decreases with the distance to cover.

Other known cleaning devices are described in US2015/0343999 and EP2955069.

The present invention solves this problem by providing a cleaning device as defined in claim 1 for a detection system in a vehicle, comprising an air circuit and a liquid circuit configured to spray air and liquid on the detection system, the cleaning device comprising a first chamber and a second chamber. The first chamber is configured to be filled by one of air and liquid, whereas the second chamber is configured to be filled by the other one of said air and liquid. The total volume of the first and second chambers is fixed, and the cleaning device is configured to vary the volume of one of the first and second chambers so as to change the pressure in the other one of the first and second chambers.

The compression of the air is created by the interaction of both of the first and second chambers. More particularly, it's the filling of one chamber by the liquid which leads to the compression of the air inside the other chamber. Thus, such cleaning device needs only a liquid source to be functional and to be able to control spraying both liquid and compressed air. The result is a space saving which allows to arrange the cleaning device into small parts of the vehicle which can't ordinarily receive a cleaning device linked to a compressed air source.

The detection system can comprise any type of sensor or transmitter. It can be a charged coupled device sensor, an infrared sensor or a LIDAR system for example. These types of detection system comprise a detection area which has to be constantly clean and clear to assure an optimal operating of the detection system.

The liquid circuit of the cleaning device allows to spray some water or cleaning liquid on the detection area. The air circuit of the cleaning device allows to spray compressed air on the detection area. The compressed air allows to evacuate water or cleaning liquid from the detection area in case of raining weather. The compressed air can be sprayed on the detection area after the liquid spraying in order to evacuate liquid drops which remain on the detection area.

The air circuit and the liquid circuit can comprise hoses which lead respectively air and liquid until they are sprayed on the detection area. The air circuit is linked to the chamber which is configured to contain air, and the liquid circuit is linked to the chamber which is configured to contain liquid.

According to an aspect of the invention, the air circuit comprises an air nozzle and a first electrovalve, wherein air circulation inside the air circuit depends on the first electrovalve. The air nozzle is arranged nearby the detection area of the detection system. Moreover, the air nozzle is directed toward the detection area. The proximity between the air nozzle and the detection area has to be sufficient to spray compressed air efficiently but without that the air nozzle obstructs the field of view of the detection area.

The first electrovalve is arranged on the air circuit and can be switched in two positions: an opening position which authorizes the circulation of the compressed air in the air circuit, for example until the air nozzle, and a closing position which forbids the circulation of the compressed air in the air circuit. The first electrovalve comprises an electrical part which can be remotely controlled by a control unit. It's the control unit which opens or closes the first electrovalve. When the first electrovalve is in the opening position, the compressed air circulates through the first electrovalve thanks to a fluidic part of it. In other words, the control unit is able to open or close the fluidic part via the electrical part of the first electrovalve.

When the first electrovalve is closed, it also participates to the compression of the air by closing an outer access of the air. When the air is compressed and ready to be spraying on the detection area of the detection system, the first electrovalve is opening and the compressed air is powering in the air circuit at high pressure until the air nozzle.

According to an aspect of the invention, the liquid circuit comprises a liquid nozzle and a second electrovalve, wherein liquid circulation inside the liquid circuit depends on the second electrovalve. As the air nozzle, the liquid nozzle is directed toward the detection area of the detection system without obstructing the field of view of the detection system.

The second electrovalve can be similar to the first electrovalve. The second electrovalve is operated by the control unit in order to be opened or closed. Thus, the second electrovalve authorizes or forbids the liquid spraying on the detection area.

According to an aspect of the invention, the air circuit comprises an air flow valve. The air flow valve is a valve configured to authorize the ambient air to enter into the air circuit. When the air is entered into the air circuit by the air flow valve, it can't come out by this same air flow valve. Thus, when the air is compressed, it can't come out by the air flow valve. Once the compressed air is evacuated in order to be sprayed on the detection area, the pressure returns to normal, and the air is renewed by entering via the air flow valve.

To assure its function, the air flow valve can give an access to a part of the air circuit where the compression of the air is made and be arranged upstream of the first electrovalve in relation to the direction of the compressed air in the air circuit when it's spraying on the detection area.

The air flow valve can eventually comprise an air filter. The air filter has the function to filter ambient air which enters inside the air circuit by the air flow valve. Thus, the air filter eliminates any particles which are likely to enter inside the air circuit and can create obstructions in the air circuit.

According to an aspect of the invention, the first chamber is configured to be filled by air and the second chamber is configured to be filled by liquid.

In a first embodiment of the invention, it's the first chamber which contains air. According to this first embodiment, the first chamber is a part of the air circuit, which extends from the first chamber to the air nozzle. The second chamber is a part of the liquid circuit, which also possibly has to lead the liquid until the liquid nozzle. That's why the liquid circuit is divided in two ways: a first way which leads the liquid to the second chamber, and a second way which leads the liquid to the liquid nozzle and which comprises the second electrovalve.

According to an aspect of the invention, the second chamber can be configured to be expanded in volume due to the filled liquid in the second chamber so as to reduce the volume of the first chamber and increase the pressure of the filled air in the first chamber.

As described before, the total volume of the first and second chambers is fixed. Thus, when the liquid fills the second chamber, the latter is expending which reduces at the same time the volume of the first chamber. The first chamber containing air, such air is compressed because of the expansion of the second chamber, the first electrovalve being closed and the air flow valve forbidding any air release. The air is more and more concentrated in the first chamber during the expansion of the second chamber. When the air is sufficiently compressed, the first electrovalve is opened and the compressed air is ejected from the first chamber to be sprayed by the air nozzle.

According to an aspect of the invention, the air flow valve can be disposed on a wall of the first chamber. As described before, according to the first embodiment of the cleaning device, the first chamber is configured to be filled by air. So that the air flow valve can be disposed in any wall of the first chamber as long as ambient air is able to enter inside the first chamber by the air flow valve.

According to an aspect of the invention, the air flow valve can be configured to fill the first chamber by air. Once compressed air is ejected from the first chamber to be sprayed, there is no more air in the first chamber. Furthermore, the second chamber isn't filled by liquid anymore and is deflating in order to retrieve its initial huddling up position. In that situation, the pressure inside the first chamber is going back to normal and the air can enter inside it thanks to the air flow valve. Thus, the air inside the first chamber is renewed for another potential spraying of compressed air in the detection area.

According to an aspect of the invention, the first chamber can be configured to be filled by liquid, and the second chamber can be configured to be filled by air.

In this second embodiment of the cleaning device, the second chamber stores the air which is intended to be compressed in case of necessity of air spraying. Thus, in an initial position, that is when the second chamber contains air, the second chamber is entirely expanded. The second chamber is linked to the air circuit and is a part of it. In order to link the second chamber to the rest of the air circuit, a connection between them can pass through a wall of the rigid housing which delimits the first chamber.

According to an aspect of the invention, the first chamber is configured to be expanded in volume due to the filled liquid in the first chamber so as to reduce the volume of the second chamber and increase the pressure of the filled air in the second chamber.

In this second embodiment of the cleaning device, the volume of the second chamber containing air is reduced when the volume of first chamber is expanded since the total volume of the first and second chamber is fixed.

Thus, when the cleaning device needs to spray some compressed air on the detection area of the detection system, the first chamber is filled by liquid. The latter fills the first chamber until the first chamber is expanded. The first chamber continuing to be filled, the filled liquid makes a pressure on the second chamber. Because of such pressure, the second chamber is deformed and compresses the air which is inside.

As the first embodiment, the first electrovalve being closed and the air flow valve forbidding any air release. When the air is sufficiently compressed, the first electrovalve is opened and the compressed air is ejected from the second chamber to be sprayed by the air nozzle.

According to an aspect of the invention, the air flow valve can be disposed on the air circuit. The second chamber being inside the first chamber, ambient air can't enter inside the second chamber if there is an air flow valve on any of its wall. In the second embodiment of the cleaning device, the air flow valve has to be arranged on the air circuit, where ambient air is accessible. In order to have a link with the second chamber even if the first electrovalve is closed, the air flow valve has to be arranged upstream of the first electrovalve in relation to the direction of the compressed air in the air circuit when it's spraying on the detection area.

According to an aspect of the invention, the air flow valve can be configured to fill the second chamber by air. As the first embodiment of the cleaning device with the first chamber, once the compressed air is ejected from the second chamber to be sprayed on the detection area of the detection system, the pressure inside the second chamber returns to normal, and some ambient air is able to enter inside the second chamber by the air flow valve. The liquid doesn't press the second chamber anymore, so the air can fill the second chamber, making expand the second chamber until it retrieves its maximum expansion. During the expansion, the second chamber pushes back the liquid which is inside the first chamber, so that the liquid returns in the first way of the liquid circuit. When the second chamber is totally expanded, the cleaning device is ready for another potential compressed air spraying.

According to the invention, the total volume of the first and second chambers is delimited by a rigid housing and the volume of the second chamber is delimited by a flexible socket arranged inside the rigid housing.

Dimensions and forms of such rigid housing can be various, as long as the flexible socket delimiting the second chamber can be arranged inside the rigid housing. The rigid housing can be made of rigid polymers for example. The rigid housing can also be adapted by its forms or dimensions to the external environment in order to optimize a spatial extension of the cleaning device.

The flexible socket delimiting the second chamber can be made of flexible polymers, for example in rubber. When the flexible socket is empty, meaning that there isn't any fluid or air inside it, it's huddled up on itself. The flexible socket is able to expand when fluid or air is entering inside it. The second chamber has to be arranged inside the first chamber. In other words, the flexible socket in its maximum expansion has to be arranged inside the rigid housing.

The volume of the first chamber is then defined by the remaining space non-occupied by the flexible socket delimiting the second chamber in the rigid housing.

The invention also covers a method of cleaning a detection system executed by a cleaning device as described before, such method comprising:
- a first step of compression of the air filled in one of the first and second chambers by expanding the volume of the other one of the first and second chambers filled by liquid,
- a second step of spraying of the air to the detection system by opening of the air circuit.

Such method allows the cleaning device to blow some compressed air against the detection area of the detection system in order to evacuate any raining drops or cleaning liquid drops of it.

The first step consists in a compression of the air in one of the first and second chambers containing air, which is the first chamber in the first embodiment of the invention or the second chamber in the second embodiment of the invention. For each embodiment, the air is compressed by an increasing volume of the other one of the first and second chambers which contains liquid. The increasing volume is relative to a quantity of liquid which fills the other one of the first and second chambers containing liquid.

In the first embodiment, the liquid causes the expansion of the second chamber. In other words, the filled liquid increases the volume of the second chamber.

In the second embodiment, the volume of the first chamber increase. By pressing the second chamber, the liquid decreases the volume of the second chamber, thus increases the volume of the first chamber.

The second step occurs once the first step is over, when compressed air is ready to be sprayed on the detection area. The air circuit, more particularly the first electrovalve, is opened, ejecting the compressed air through the air circuit until the air nozzle.

According to an aspect of the invention, the method of cleaning comprises an additional step of spraying of the liquid to the detection system by opening of the liquid circuit, such additional step being prior or simultaneous to the first step. More particularly, it's the second way of the liquid circuit via the second electrovalve which is opened. The liquid circulates through the second way of the liquid circuit and is sprayed on the detection system by the liquid nozzle in order to clean the detection area.

Such additional step has to happen before or simultaneously to the first step. Indeed, if the detection area needs to be sprayed by both liquid and compressed air, the liquid spraying happens before or simultaneously to the compressed air spraying. Thus, the detection area is cleaned by the liquid spraying at first. The compressed air spraying happens thereafter or at the same time in order to evacuate any drops of the liquid spraying which are maintained on the detection area.

Other features, details and advantages of the invention can be inferred from the specification of the invention given hereunder. Various embodiments are represented in the figures wherein:
[fig 1] shows a first embodiment of a cleaning device for a detection system included in a side mirror,
[fig 2] shows the first embodiment of the cleaning device from a different angle of view in order to detail some characteristics of it,
[fig 3] shows a detailed view of the detection system,
[fig 4] shows a schematic drawing of a first chamber and a second chamber according to the first embodiment during a first stage,
[fig 5] shows a schematic drawing of the first chamber and the second chamber according to the first embodiment during a second stage,
[fig 6] shows a schematic drawing of the first chamber and the second chamber according to the first embodiment during a third stage,
[fig 7] shows a schematic drawing of the first chamber and the second chamber according to the first embodiment during a fourth stage,
[fig 8] shows a schematic drawing of a first chamber and a second chamber according to a second embodiment during a first stage,
[fig 9] shows a schematic drawing of the first chamber and the second chamber according to the second embodiment during a second stage,
[fig 10] shows a schematic drawing of the first chamber and the second chamber according to the second embodiment during a third stage,
[fig 11] shows a schematic drawing of the first chamber and the second chamber according to the second embodiment during a fourth stage.

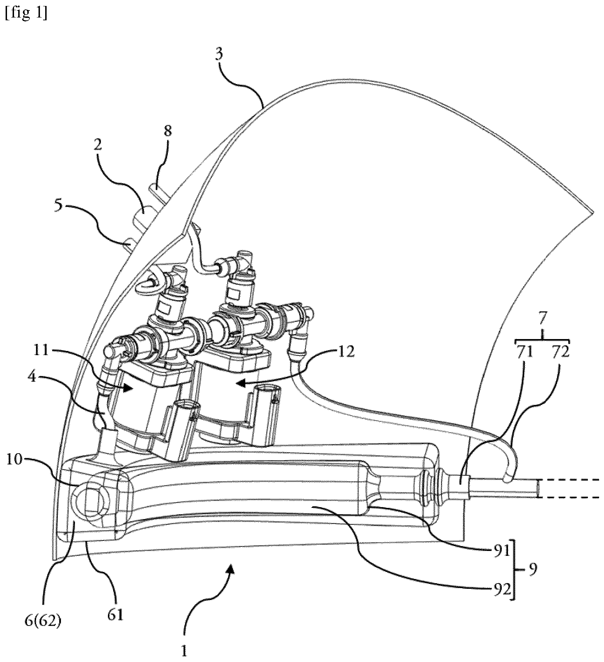

The figure 1 illustrates a first embodiment of a cleaning device 1 which is included in a vehicle. The cleaning device 1 is able to spray some liquid and some compressed air on a detection system 2 in order to clean it. More particularly, it's a detection area of the detection system 2 which could need to be cleaned, for example in case of an obstruction of a field of view of the detection system 2. The cleaning device 1 can be activated by a manual operation made by a user in the vehicle. The cleaning device 1 can also be activated by an automatic manner, for example if the detection system 2 comprises a sensor which is able to transmit a command to the cleaning device 1 which indicates that the detection area is obstructed. In the figure 1, the cleaning device 1 and the detection system 2 are arranged on a side mirror 3. The detection system 2 passes across the side mirror 3 in order to have a clear field of view. The cleaning device 1 is mainly arranged behind the side mirror 3. Nevertheless, it's possible to arrange the cleaning device 1 in any part of the vehicle which comprises a detection system 2.

In order to spray both liquid and compressed air, the cleaning device comprises an air circuit 4 and a liquid circuit 7. According to the first embodiment of the cleaning device 1, the air circuit 4 consists in a duct which extends from a first chamber 6 to an air nozzle 5.

The liquid circuit 7 can be linked to any liquid tank arranged in the vehicle and the circulation of the liquid can be initiated for example by a pump. The liquid tank and the pump are not illustrated in the figure 1. Such liquid can be some water or some cleaning liquid. The liquid circuit 7 is divided in a first way 71 and a second way 72. The first way 71 of the liquid circuit 7 leads the liquid to a second chamber 9.

The total volume of the first and second chambers 6, 9 is delimited by a rigid housing 61. In order to limit a mechanical expansion of the cleaning device 1, the rigid housing 61 can be configured to mold a form of the part of the vehicle where the cleaning device 1 is arranged, here the size mirror 3 according to the figure 1. The rigid housing 61 can be in rigid polymers for example.

According to the first embodiment of the cleaning device 1, the second chamber 9 defines a volume 92, or an internal volume 92 in a more accurate way, delimited by a flexible socket 91 and the first chamber 6 defines a volume 62, or an internal volume 62 in a more accurate way, delimited by the remaining space non-occupied by the second chamber 9 in the rigid housing 61. The first chamber 6 is here configured to be filled by air.

The flexible socket 91 is in flexible polymers, in rubber for example. Thanks to its flexibility, the flexible socket 91 is able to expand itself when it's filled by a fluid. Thus, the volume 92 of the second chamber 9 is able to increase or decrease according to a quantity of fluid which is contained inside the second chamber 9. In the figure 1, the flexible socket 91 is totally expanded.

The second chamber 9 is arranged inside the rigid housing 61. In the figure 1, the second chamber 9 is virtually visible by transparency for reasons of clarity. According to the first embodiment of the cleaning device 1, the second chamber 9 is configured to be filled by liquid, water or cleaning liquid for example. When the liquid fills the second chamber 9, it expends itself and fills the volume 62 of the first chamber 6. Thus, the air which is contained in the first chamber 6 is compressed by the expansion of the second chamber 9.

When the cleaning device 1 is activated, more particularly when it's necessary to spray some air against the detection system 2, the air circulates along the air circuit 4, starting from the first chamber 6 to the air nozzle 5. In order to spray compressed air to the detection system 2, the air nozzle 5 need to pass across the side mirror 3.

The air circuit 4 comprises a first electrovalve 11. The first electrovalve 11 is arranged between the first chamber 6 and the air nozzle 5. When the first electrovalve 11 is open, for example once the air inside the first chamber 6 is compressed, the air can circulate from the first chamber 6 to the air nozzle 5. When the first electrovalve 11 is closed, the air is maintained between the first chamber 6 and the first electrovalve 11. The first electrovalve 11 will be further described in details.

The cleaning device 1 comprises an air flow valve 10. In the first embodiment, the air flow valve 10 is arranged on a wall of the rigid housing 61 of the first chamber 6. The air flow valve 10 authorizes an entry of the ambient air inside the first chamber 6 and forbids an exit of the air which is contained in the first chamber 6. Thus, the air can be compressed inside the first chamber 6, the first electrovalve 11 being closed and the air flow valve 10 forbidding any air release. Once the compressed air is sprayed by the air nozzle 5, the air inside the first chamber 6 is renewed by entering through the air flow valve 10.

The second way 72 of the liquid circuit 7 is extending until a liquid nozzle 8. As the air nozzle 5, the liquid nozzle 8 needs to pass across the side mirror 3 to be able to spray liquid against the detection system 2. The liquid spraying is controlled by a second electrovalve 12. As the first electrovalve 11, the second electrovalve 12 has the function to authorize the circulation of the liquid all along the second way 72 until the liquid nozzle 8. The opening or the closing of the second electrovalve 12 depends on a need of the detection system 2 to be cleaned. The second electrovalve 12 can be identical to the first electrovalve 11 and will be further describing in details too.

When the detection system 2 needs to be cleaned, the cleaning device 1 starts by spraying liquid thanks to the liquid nozzle 8. After that, the cleaning device 1 sprays compressed air thanks to the air nozzle 5 in order to blow out of the detection system 2 any drops of liquid which could be staying on the detection area of the detection system 2. In this case, liquid circulates both in the first way 71 and the second way 72 of the liquid circuit 7.

In another situation, for example in case of raining weather, the cleaning device 1 just has to blow any raining drops which are on the detection system 2. In this case, only the air nozzle 5 needs to be activated. Consequently, the liquid circulates only in the first way 71 of the liquid circuit 7.

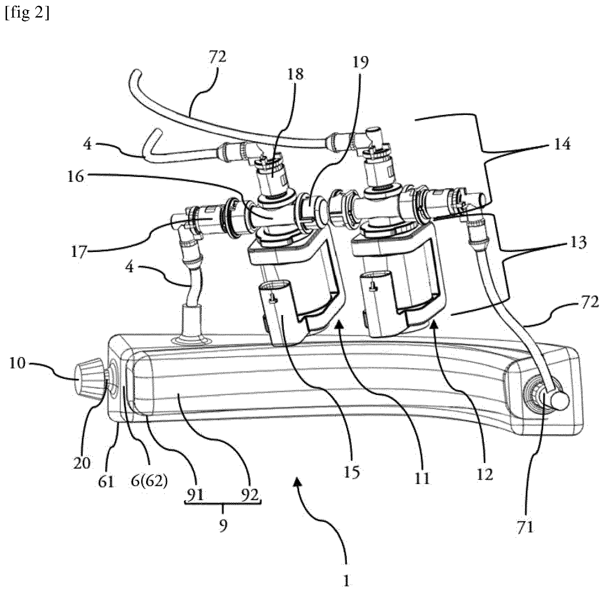

The figure 2 illustrates only the cleaning device 1 according to the first embodiment and allows to describe in details the two electrovalves. The first electrovalve 11 and the second electrovalve 12 are divided into two parts. Each electrovalve comprises an electrical part 13 and a fluidic part 14.

The electrical part 13 contains some electrical and electronicalo components which participate to the opening or the closing of the electrovalve. The electrical part 13 comprises an electrical outlet 15. The electrical outlet 15 is configured to receive an electrical connector which makes the link between the electrovalve and a control unit, which isn't represented on the figure 2. The control unit is able to control simultaneously both electrovalves. More particularly, the control unit is able to open or close the fluidic part 14 of each electrovalve.

The fluidic part 14 is the part of the electrovalve where each fluid is passing through. The first electrovalve 11 is arranged in the air circuit 4 and controls the crossing of the compressed air. The second electrovalve 12 is arranged in the second way 72 of the liquid circuit 7 and controls the crossing of the liquid.

Each fluidic part 14 of each electrovalve comprises a fluidic duct 16, a fluidic inlet 17 and a fluidic outlet 18. Each fluid in each circuit crosses each electrovalve by passing the fluidic inlet 17, the fluidic duct 16 and the fluidic outlet 18 in this order. It's the fluidic duct 16 which is opened or closed by the electric part 13. If the fluidic duct 16 is closed, the fluid is blocked at the fluidic inlet 17 of the electrovalve. When the electrovalve is opened, the fluid crosses it, and is lead until the nozzle of the involved circuit via the fluidic outlet 18.

The fluidic duct 16 is extended in its main direction from the fluidic inlet 17 to a plug 19 which ensures the tightness. The fluidic outlet 18 is arranged in a perpendicular manner to the fluidic duct 16.

The air flow valve 10 comprises an air filter 20. Any ambient air which passes across the air flow valve 10 crosses the air filter 20 too. The air filter 20 filters the air to ensure that the air in the air circuit 4 is purified from any particles which risk to obstruct the air circuit 4 for example.

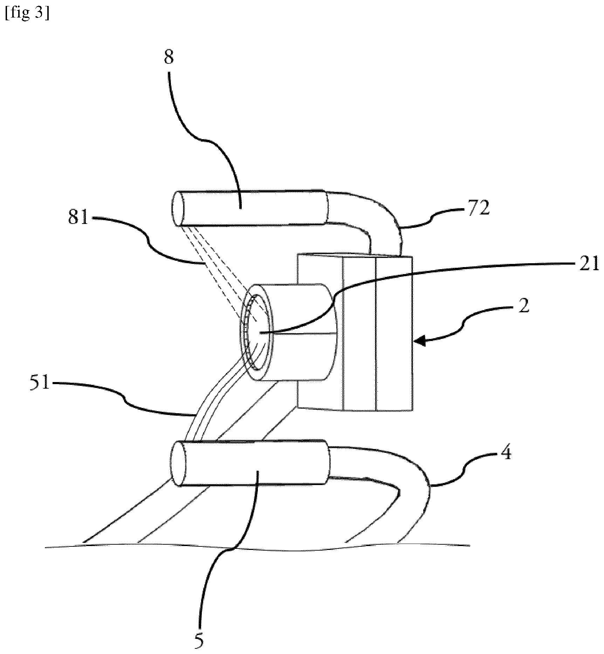

The figure 3 is a representation of the detection system 2 sprayed by the air nozzle 5 and the liquid nozzle 8. In the figure 3, the detection system 2 is represented by a small camera comprising a detection area 21. The detection area 21 can correspond to a camera lens for example. It's the detection area 21 which has to be cleaned in order to maintain an optimal field of view for the detection system 2 and keep it operating.

The air nozzle 5 and the liquid nozzle 8 are arranged on both sides of the detection system 2. Nevertheless, it's possible to arrange the two nozzles differently, the essence being to not obstruct the field of view of the detection system 2 and to correctly orient each nozzle toward the detection area 21.

The air nozzle 5 is arranged on a side of the air circuit 4 and is able to spray compressed air 51 on the detection area 21 of the detection system 2. The liquid nozzle 8 is arranged on a side of the second way 72 of the liquid circuit and is able to spray liquid 81 on the detection area 21 of the detection system 2. Both sprayings depend on the opening of both electrovalves. The first electrovalve authorizes the circulation of the compressed air 51 in the air circuit 4 whereas the second electrovalve authorizes the circulation of the liquid 81 in the second way 72 of the liquid circuit.

The air nozzle 5 can be operated alone in order to evacuate the existing drops on the detection area 21, for example during raining weather, or just after a liquid spraying coming from the liquid nozzle 8.

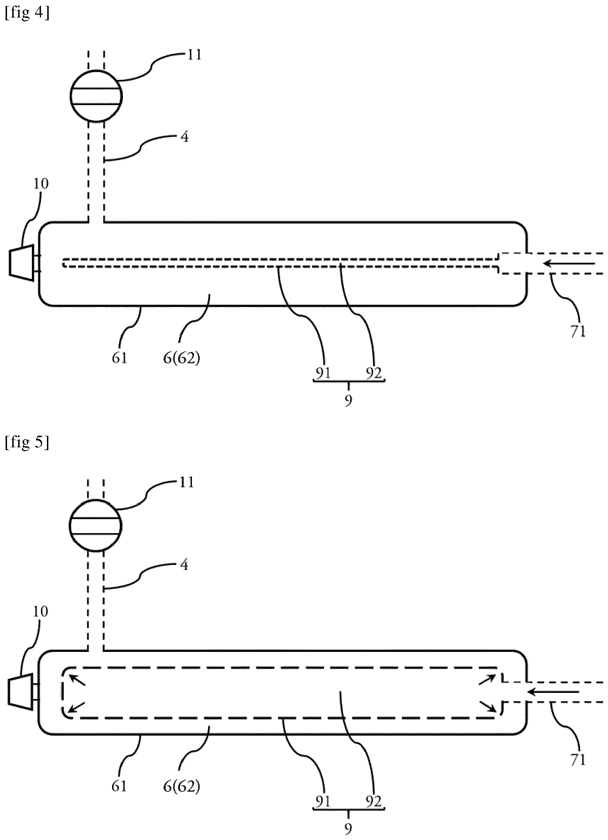

Figures 4 to 7 shows a progress of the interaction of the first chamber 6 and the second chamber 9 according to the first embodiment of the cleaning device and in order to spray some compressed air on the detection system. As a reminder, according to the first embodiment, the first chamber 6 is configured to contain air and the second chamber is configured to contain liquid.

In the figure 4, the first chamber 6, more particularly the volume 62 delimited by the remaining space non-occupied by the second chamber 9 in the rigid housing 61, is full of air at a normal pressure. The second chamber 9 is empty and the flexible socket 91 is huddled up on itself. The volume 92 of the second chamber 9 has a null or noticeably null value. The first electrovalve 11 is schematically represented on the figure 4 in a closed position. According to the figure 4, a manual or automatic command has been executed in order to spray an amount of compressed air to the detection system. That's why a liquid flow is coming from the first way 71 of the liquid circuit in order to fill the second chamber 9.

In the figure 5, the liquid fills the second chamber 9. That's why the flexible socket 91 expends itself and appears as a maximum expansion in the figure 5. The filling of the flexible socket 91 increases the volume 92 of the second chamber 9 and reduces the volume 62 of the first chamber 6, which corresponds to total volume of the rigid housing 61 minus the volume 92 of the second chamber 9. The liquid flow passing by the first way 71 of the liquid circuit is continuous, so the flexible socket 91 is maintained at its maximum expansion.

The first electrovalve 11 is still closed. Thus, the air which is inside the first chamber 6 is compressed in some free space of the volume 62 of the first chamber 6 and in a part of the air circuit 4 between the first chamber 6 and the first electrovalve 11. The high pressure of the air included in the first chamber 6 forbids any entry or exit of the air by the air flow valve 10. Thus, in the figure 5, the compressed air is contained in a sealed recipient.

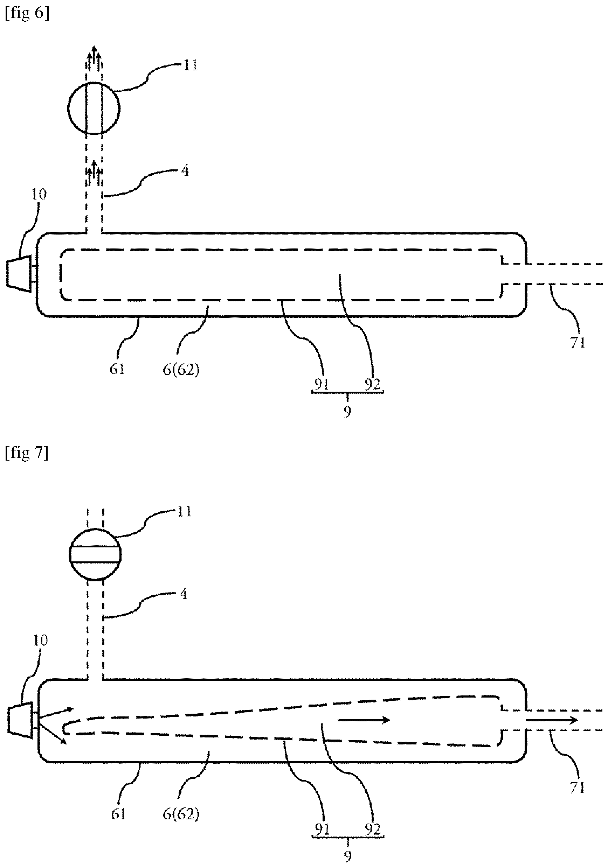

In the figure 6, the compressed air is ready to be ejected from the first chamber 6 in order to be sprayed on the detection system. The first electrovalve 11 is opened thanks to the control unit. Consequently, the compressed air is entering into the air circuit 4, through the first electrovalve 11, in order to be sprayed. Once the compressed air is ejected from the first chamber 6, the liquid flow is reaching the maximum expansion.

The interruption of the liquid flow creates a decreasing of the volume 92 of the second chamber 9, as illustrated in the figure 7. Such decreasing is due to the flexible socket 91, which isn't submitted to the liquid flow anymore, and which progressively retrieves its initial position, huddling up on itself, as illustrated in the figure 4. The flexible socket 91 pushes the liquid contained in the volume 92 of the second chamber 9 back to the first way 71 of the liquid circuit.

The decreasing of the volume 92 of the second chamber 9 leads to an increasing of the volume 62 of the first chamber 6. Thus, the first chamber 6 retrieves a normal pressure, and ambient air progressively enters inside the volume 62 of the first chamber 6 by the air flow valve 10. The first electrovalve 11 being closed up, the air entering by the air flow valve 10 is maintained in the first chamber 6 and in the part of the air circuit 4 between the first chamber 6 and the first electrovalve 11. Thus, the air is renewed inside the first chamber 6 for a future spraying of compressed air to the detection system.

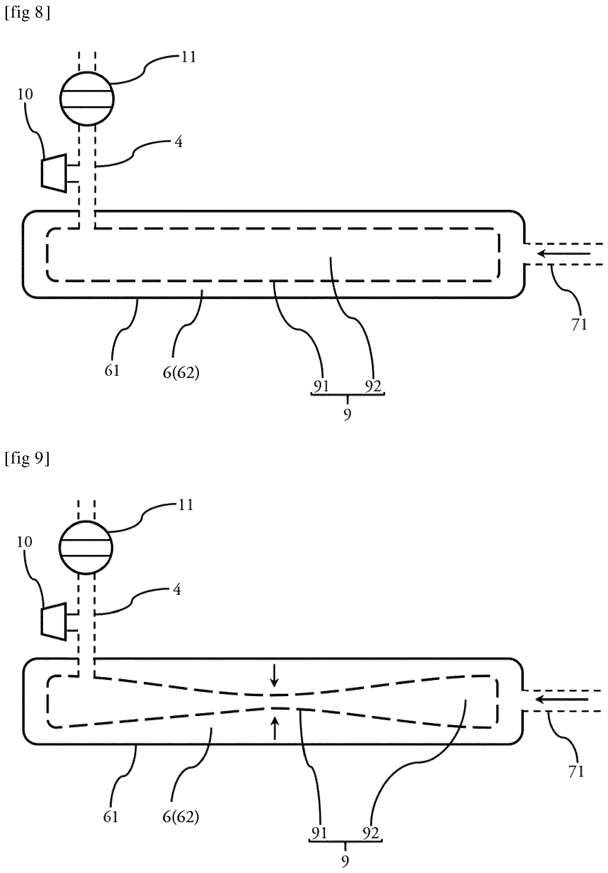

Figures 8 to 11 shows a progress of the interaction of the first chamber 6 and the second chamber 9 according to a second embodiment of the cleaning device. Contrary to the first embodiment, in the second embodiment, the first chamber 6 is configured to contain liquid and the second chamber 9 is configured to contain air. Such interchanging leads to some differences from the first embodiment of the cleaning device, concerning in particular the connections between each circuit and each chamber.

Thus, in this second embodiment, the air circuit 4 comprises the second chamber 9, so that the air circuit 4 passes across the rigid housing 61 of the first chamber 6. The air flow valve 10 is arranged in the air circuit 4, between the second chamber 9 and the first electrovalve 11, in order to have an access to ambient air. The liquid circuit, in contrast, includes the first chamber 6, and the first way 71 of the liquid circuit is linked to the rigid housing 61. But as the first embodiment, the air is compressed thanks to the liquid.

In the figure 8, the second chamber 9 is full of air. Such air fills the flexible socket 91 which is in its maximum expansion. The first electrovalve 11 is closed and the air can't exit by the air flow valve 10. As the first embodiment, in order to compress the air, a liquid flow circulates in the first way 71. According to the second embodiment, the liquid fills the volume 62 of the first chamber 6 and flows all around the second chamber 9.

As the liquid continues to fills the volume 62 of the first chamber 6, it ends up making a pressure on the second chamber 9, as represented in the figure 9. The liquid presses the flexible socket 91 and decreases the volume 92 of the second chamber 9 by increasing the volume 62 of the first chamber 6. The loss of volume 92 of the second chamber 9 compresses the air contained inside it, the first electrovalve 11 being closed and the air flow valve 10 forbidding any air release.

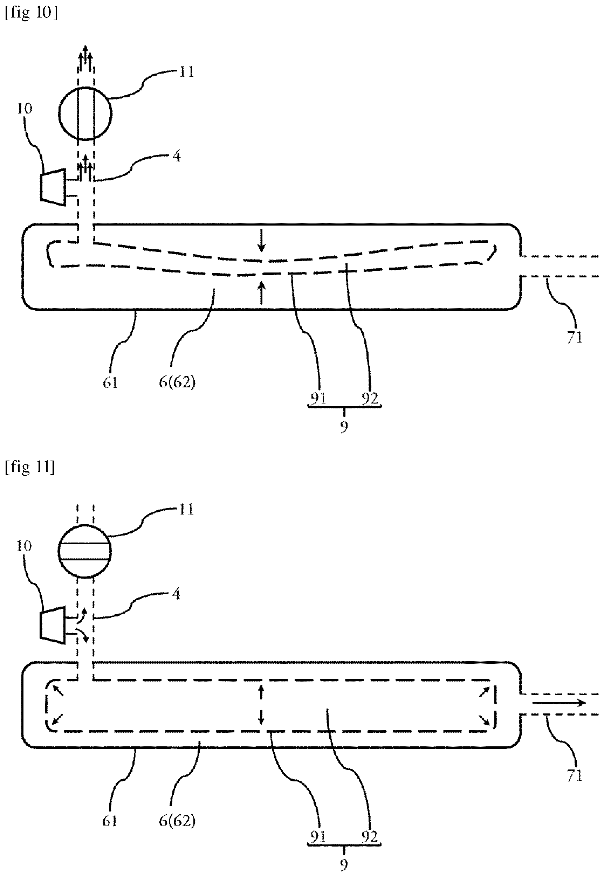

When the compressed air is ready to be sprayed, the first electrovalve 11 is opening, as represented in the figure 10. The compressed air is ejected from the second chamber 9 in order to be sprayed by the air nozzle to the detection area of the detection system. Thus, the air being ejected, the liquid totally or almost totally presses the light socket 91 which is huddled up on itself.

After that, according to the figure 11, the liquid flow is stopped, and the liquid doesn't press the second chamber 9 anymore, whose pressure is coming back to normal. The air flow valve 10 allows the ambient air to enter inside the air circuit 4, more particularly in the second chamber and in a part of the air circuit 4 between the second chamber 9 and the first electrovalve 11, which is closed up. The entry of ambient air inside the second chamber 9 allows the flexible socket 91 to expand inside the first chamber 6. Thus, the flexible socket 91 pushes the liquid inside the first chamber 6 back to the first way 71 of the liquid circuit. When the flexible socket 91 is in its maximum expansion, the cleaning device is ready for a future spraying of compressed air to the detection system.

It will be understood from the foregoing that the present invention provides a cleaning device for a detection system which is able to spray both liquid and compressed air on the detection system, such compressed air being generated by pressure of such liquid.

## Claims

1. Cleaning device (1) for a detection system (2) in a vehicle, comprising an air circuit (4) and a liquid circuit (7) configured to spray air and liquid on the detection system (2), the cleaning device (1) comprising a first chamber (6) and a second chamber (9), the first chamber (6) being configured to be filled by one of air and liquid, whereas the second chamber (9) is configured to be filled by the other one of said air and liquid, wherein the total volume of the first and second chambers (6, 9) is fixed, and that the cleaning device (1) is configured to vary the volume of one of the first and second chambers (6, 9) so as to change the pressure in the other one of the first and second chambers (6, 9), wherein the total volume of the first and second chambers (6, 9) is delimited by a rigid housing (61), **characterized in that** the volume of the second chamber (9) is delimited by a flexible socket (91) arranged inside the rigid housing (61).

2. Cleaning device (1) according to claim 1, wherein the air circuit (4) comprises an air nozzle (5) and a first electrovalve (11), wherein air circulation inside the air circuit (4) depends on the first electrovalve (11).

3. Cleaning device (1) according to claim 1 or 2, wherein the liquid circuit (7) comprises a liquid nozzle (8) and a second electrovalve (12), wherein liquid circulation inside the liquid circuit (7) depends on the second electrovalve (12).

4. Cleaning device (1) according to any of the preceding claims, wherein the air circuit (4) comprises an air flow valve (10).

5. Cleaning device (1) according to any of the preceding claims, wherein the first chamber (6) is configured to be filled by air and the second chamber (9) is configured to be filled by liquid.

6. Cleaning device (1) according to the preceding claim, wherein the second chamber (9) is configured to be expanded in volume due to the filled liquid in the second chamber (9) so as to reduce the volume of the first chamber (6) and increase the pressure of the filled air in the first chamber (6).

7. Cleaning device (1) according to any of the claims 5 and 6, combined with the claim 4, wherein the air flow valve (10) is disposed on a wall of the first chamber (6).

8. Cleaning device (1) according to the preceding claim, wherein the air flow valve (10) is configured to fill the first chamber (6) by air.

9. Cleaning device (1) according to any of the claim 1 to 4, wherein the first chamber (6) is configured to be filled by liquid and the second chamber is configured to be filled by air.

10. Cleaning device (1) according to claim 9, wherein the first chamber (6) is configured to be expanded in volume due to the filled liquid in the first chamber (6) so as to reduce the volume of the second chamber (9) and increase the pressure of the filled air in the second chamber (9).

11. Cleaning device according to any of the claims 9 and 10, combined with claim 4, wherein the air flow valve (10) is disposed on the air circuit (4).

12. Cleaning device according to the preceding claim, wherein the air flow valve (10) is configured to fill the second chamber (9) by air.

13. Method of cleaning a detection system (2) executed by a cleaning device (1) according to any of the preceding claims, such method comprising:
- a first step of compression of the air filled in one of the first and second chambers (6, 9) by expanding the volume of the other one of the first and second chambers (6, 9) filled by liquid,
- a second step of spraying of the air to the detection system (2) by opening of the air circuit (4).

14. Method of cleaning according to the preceding claim, comprising an additional step of spraying of the liquid to the detection system (2) by opening of the liquid circuit (7), such additional step being prior or simultaneous to the first step.

## Patentansprüche

1. Reinigungsvorrichtung (1) für ein Detektionssystem (2) in einem Fahrzeug, umfassend einen Luftkreis (4) und einen Flüssigkeitskreis (7), ausgelegt zum Sprühen von Luft und Flüssigkeit auf das Detektionssystem (2), wobei die Reinigungsvorrichtung (1) eine erste Kammer (6) und eine zweite Kammer (9) umfasst, wobei die erste Kammer (6) dazu ausgelegt ist, durch eines aus Luft und Flüssigkeit gefüllt zu werden, wohingegen die zweite Kammer (9) dazu ausgelegt ist, durch das andere aus Luft und Flüssigkeit gefüllt zu werden,
wobei das Gesamtvolumen der ersten und der zweiten Kammer (6, 9) fest ist und wobei die Reinigungsvorrichtung (1) ausgelegt ist zum Variieren des Volumens einer aus der ersten und zweiten Kammer (6, 9), um den Druck in der anderen aus der ersten und der zweiten Kammer (6, 9) zu ändern, wobei das Gesamtvolumen der ersten und der zweiten Kammer (6, 9) durch ein starres Gehäuse (61) begrenzt ist, **dadurch gekennzeichnet, dass** das Volumen der zweiten Kammer (9) durch einen flexiblen Sockel (91) begrenzt ist, der innerhalb des starren Gehäuses (61) angeordnet ist.

2. Reinigungsvorrichtung (1) nach Anspruch 1, wobei der Luftkreis (4) eine Luftdüse (5) und ein erstes Elektroventil (11) umfasst, wobei Luftzirkulation innerhalb des Luftkreises (4) vom ersten Elektroventil (11) abhängt.

3. Reinigungsvorrichtung (1) nach Anspruch 1 oder 2, wobei der Flüssigkeitskreis (7) eine Flüssigkeitsdüse (8) und ein zweites Elektroventil (12) umfasst, wobei Flüssigkeitszirkulation innerhalb des Flüssigkeitskreises (7) vom zweiten Elektroventil (12) abhängt.

4. Reinigungsvorrichtung (1) nach einem der vorhergehenden Ansprüche, wobei der Luftkreis (4) ein Luftstromventil (10) umfasst.

5. Reinigungsvorrichtung (1) nach einem der vorhergehenden Ansprüche, wobei die erste Kammer (6) dazu ausgelegt ist, durch Luft gefüllt zu werden, und die zweite Kammer (9) dazu ausgelegt ist, durch Flüssigkeit gefüllt zu werden.

6. Reinigungsvorrichtung (1) nach dem vorhergehenden Anspruch, wobei die zweite Kammer (9) dazu ausgelegt ist, aufgrund der in die zweite Kammer (9) gefüllten Flüssigkeit dem Volumen nach ausgedehnt zu werden, um das Volumen der ersten Kammer (6) zu verringern und den Druck der eingefüllten Luft in der ersten Kammer (6) zu erhöhen.

7. Reinigungsvorrichtung (1) nach einem der Ansprüche 5 und 6, kombiniert mit dem Anspruch 4, wobei das Luftstromventil (10) an einer Wand der ersten Kammer (6) angeordnet ist.

8. Reinigungsvorrichtung (1) nach dem vorhergehenden Anspruch, wobei das Luftstromventil (10) dazu ausgelegt ist, die erste Kammer (6) durch Luft zu füllen.

9. Reinigungsvorrichtung (1) nach einem der Ansprüche 1 bis 4, wobei die erste Kammer (6) dazu ausgelegt ist, durch Flüssigkeit gefüllt zu werden, und die zweite Kammer dazu ausgelegt ist, durch Luft gefüllt zu werden.

10. Reinigungsvorrichtung (1) nach Anspruch 9, wobei die erste Kammer (6) dazu ausgelegt ist, aufgrund der in die erste Kammer (6) gefüllten Flüssigkeit dem Volumen nach ausgedehnt zu werden, um das Volumen der zweiten Kammer (9) zu verringern und den Druck der eingefüllten Luft in der zweiten Kammer (9) zu erhöhen.

11. Reinigungsvorrichtung nach einem der Ansprüche 9 und 10, kombiniert mit Anspruch 4, wobei das Luftstromventil (10) am Luftkreis (4) angeordnet ist.

12. Reinigungsvorrichtung nach dem vorhergehenden Anspruch, wobei das Luftstromventil (10) dazu ausgelegt ist, die zweite Kammer (9) durch Luft zu füllen.

13. Verfahren zur Reinigung eines Detektionssystems (2), ausgeführt durch eine Reinigungsvorrichtung (1) nach einem der vorhergehenden Ansprüche, wobei ein solches Verfahren Folgendes umfasst:
- einen ersten Schritt der Komprimierung der in eine aus der ersten und der zweiten Kammer (6, 9) gefüllten Luft durch Ausdehnen des Volumens der anderen aus der ersten und der zweiten Kammer (6, 9), die durch Flüssigkeit gefüllt ist,
- einen zweiten Schritt des Sprühens der Luft auf das Detektionssystem (2) durch Öffnen des Luftkreises (4).

14. Verfahren zur Reinigung nach dem vorhergehenden Anspruch, umfassend einen zusätzlichen Schritt des Sprühens der Flüssigkeit auf das Detektionssystem (2) durch Öffnen des Flüssigkeitskreises (7), wobei ein solcher zusätzlicher Schritt vor oder gleichzeitig mit dem ersten Schritt erfolgt.

## Revendications

1. Dispositif de nettoyage (1) pour système de détection (2) dans un véhicule, comprenant un circuit d'air (4) et un circuit de liquide (7) conçus pour pulvériser de l'air et du liquide sur le système de détection (2), le dispositif de nettoyage (1) comprenant une première chambre (6) et une seconde chambre (9), la première chambre (6) étant conçue pour être remplie par l'un parmi de l'air et du liquide, tandis que la seconde chambre (9) est conçue pour être remplie par l'autre parmi lesdits air et liquide, le volume total des première et seconde chambres (6, 9) étant fixe, et le dispositif de nettoyage (1) étant conçu pour faire varier le volume de l'une des première et seconde chambres (6, 9) de sorte à modifier la pression dans l'autre des première et seconde chambres (6, 9),
le volume total des première et seconde chambres (6, 9) étant délimité par un boîtier rigide (61), **caractérisé en ce que** le volume de la seconde chambre (9) est délimité par une prise flexible (91) disposée à l'intérieur du boîtier rigide (61).

2. Dispositif de nettoyage (1) selon la revendication 1, le circuit d'air (4) comprenant une buse d'air (5) et une première électrovalve (11), la circulation de l'air à l'intérieur du circuit d'air (4) dépendant de la première électrovalve (11).

3. Dispositif de nettoyage (1) selon la revendication 1 ou 2, le circuit de liquide (7) comprenant une buse de liquide (8) et une seconde électrovalve (12), la circulation du liquide à l'intérieur du circuit de liquide (7) dépendant de la seconde électrovalve (12).

4. Dispositif de nettoyage (1) selon l'une quelconque des revendications précédentes, le circuit d'air (4) comprenant une vanne de flux d'air (10).

5. Dispositif de nettoyage (1) selon l'une quelconque des revendications précédentes, la première chambre (6) étant conçue pour être remplie d'air et la seconde chambre (9) étant conçue pour être remplie de liquide.

6. Dispositif de nettoyage (1) selon la revendication précédente, la seconde chambre (9) étant conçue pour subir une expansion en volume en raison du liquide dans la seconde chambre (9) de sorte à réduire le volume de la première chambre (6) et à augmenter la pression de l'air dans la première chambre (6).

7. Dispositif de nettoyage (1) selon l'une quelconque des revendications 5 et 6, combinée à la revendication 4, la vanne de flux d'air (10) étant disposée sur une paroi de la première chambre (6).

8. Dispositif de nettoyage (1) selon la revendication précédente, la vanne de flux d'air (10) étant conçue pour remplir la première chambre (6) d'air.

9. Dispositif de nettoyage (1) selon l'une quelconque des revendications 1 à 4, la première chambre (6) étant conçue pour être remplie de liquide et la seconde chambre étant conçue pour être remplie d'air.

10. Dispositif de nettoyage (1) selon la revendication 9, la première chambre (6) étant conçue pour subir une expansion en volume en raison du liquide dans la première chambre (6) de sorte à réduire le volume de la seconde chambre (9) et à augmenter la pression de l'air dans la seconde chambre (9).

11. Dispositif de nettoyage selon l'une quelconque des revendications 9 et 10, combinée à la revendication 4, la vanne de flux d'air (10) étant disposée sur le circuit d'air (4).

12. Dispositif de nettoyage selon la revendication précédente, la vanne de flux d'air (10) étant conçue pour remplir la seconde chambre (9) d'air.

13. Procédé de nettoyage d'un système de détection (2) exécuté par un dispositif de nettoyage (1) selon l'une quelconque des revendications précédentes, ce procédé comprenant :
une première étape de compression de l'air contenu dans l'une des première et seconde chambres (6, 9) par expansion du volume de l'autre des première et seconde chambres (6, 9) remplie de liquide,
une seconde étape de pulvérisation de l'air vers le système de détection (2) par ouverture du circuit d'air (4) .

14. Procédé de nettoyage selon la revendication précédente, comprenant une étape supplémentaire de pulvérisation du liquide vers le système de détection (2) par ouverture du circuit de liquide (7), cette étape supplémentaire étant antérieure ou simultanée à la première étape.
